# EUROPEAN PATENT SPECIFICATION

(11) **EP 2 192 022 B1**
(45) Date of publication and mention of the grant of the patent: **02.01.2013**
(21) Application number: 09014320.7
(22) Date of filing: 17.11.2009
(51) Int. Cl.: B62B 7/08, B62B 7/14

(54) **Foldable stroller and fold linkage for same**
Zusammenklappbarer Kinderwagen und Klappverbindung dafür
Poussette pliable et liaison de pliage pour celle-ci

(30) Priority: 26.11.2008 US 118193 P; 24.03.2009 US 410243; 02.11.2009 US 610902
(43) Date of publication of application: 02.06.2010
(73) Proprietor: GRACO CHILDREN'S PRODUCTS, INC., Atlanta GA 30328 (US)
(72) Inventor: Ahnert, Stephen, Philadelphia, PA 19106 (US); Dean, Roy L., Pottstown, PA 19464 (US); Grintz, Joseph T., Glenmoore, PA 19343 (US); Sorzano, Todd D., Atglen, PA 19310 (US)
(74) Representative: Winkler, Andreas Fritz Ernst

(56) References cited:
- EP-A2- 1 647 463
- EP-A2- 1 900 599
- US-A- 5 709 400
- US-B1- 7 077 420

## Description

### Background

### 1. Field of the Disclosure

The present disclosure is generally directed to foldable strollers, and more particularly to a foldable stroller with a frame fold linkage that is hidden or housed within one or more stroller frame components.

### 2. Description of Related Art

Foldable strollers are known in the art. A typical foldable stroller has a frame assembly and a toddler or child seat supported by the frame assembly. Components of the frame assembly collapse or fold relative to one another when the structure is folded. A typical foldable stroller has fold links, or drive links, that are exposed in plain sight. On many strollers, one or more of the various exposed frame links and frame elements, as well as the geometry of same, drive folding of the stroller frame. For example, a user may fold the handle on a typical stroller, whereby the other frame components are driven to also fold upon movement of the handle. These drive or fold links and elements typically meet at fold joints, which can create shear and/or pinch points. These frame points can catch or pinch things small enough to fit between or within the components. Known fold joints and fold linkage arrangements also tend to detract from the overall appearance of the strollers. Fold joints can also fail from wear and tear.

The typical "solutions" to these problems do not actually solve the problems or address the disadvantages. Instead, the so-called solutions typically involve attempting to divert attention away from the drive or fold links and cumbersome fold joints using creative coloring, camouflaging, fancy exterior treatments, and/or integration of the visible fold linkage components into the aesthetic design of the rest of the stroller. Many strollers produced by Graco Children's Products Inc., for example, have tubes or stampings painted a different, and often darker, color in order to divert attention to other aspects of the stroller.

Other strollers simply cover these links and joints with fabric, such as from the stroller basket, in order to mask the fold linkage components from plain view. On some strollers, the drive links are integrated into the design of the stroller by making the components out of exotic materials, such as anodized aluminum, carbon fiber, textured plastics, or the like. On some strollers, the fold linkage or drive link components are designed in such a way that the links, although required only to drive the folding motion of the frame, look like they are structurally integral to the frame configuration.

### Summary

In one example according to the teachings of the present invention, a foldable stroller has a frame assembly that is reconfigurable between an in-use frame configuration and a folded frame configuration. The frame assembly can have a first frame part and a second frame part movable between respective in-use positions and folded positions relative to one another that correspond to the in-use and folded frame configurations. A fold joint can be connected to the first frame part and to the second frame part and can have a joint pivot about which the first and second frame parts pivot relative to one another between the respective in-use and folded positions. A fold link can have one end coupled to part of the frame fold joint at a pivot point spaced from the joint pivot and can have an opposite end coupled to the first frame part at a connection point spaced from the fold pivot. When the second frame part is pivoted from the in-use position toward the folded position, the fold link can drive movement of part of the frame assembly toward the folded frame configuration. The fold link can be hidden within an interior of the first frame part with the frame assembly in the in-use configuration.

In one example according to the teachings of the present invention, the frame assembly can have left and right sides. Each side can have one of the first and second frame parts, one of the fold joints, and one of the fold links.

EP 1 647 463 A2, US 7,077,420 B1 and EP 1 900 599 A2 all disclose foldable strollers wherein a frame assembly is reconfigurable between an in-use frame configuration and a folded frame configuration with an arrangement of joints and pivots to allow such reconfiguration.

In one example according to the teachings of the present invention, the first frame part can be a rear leg of the frame assembly. In one example according to the teachings of the present invention, the second frame part can be a push bar of a handle assembly.

In one example according to the teachings of the present invention, a stroller can have a shuttle slidable within the interior of the first frame part. The opposite end of the fold link can be connected to the shuttle.

In one example according to the teachings of the present invention, the fold joint can include a cam positioned within the interior of the first frame part with the frame assembly in the in-use configuration. The cam can be pivotable out of the interior when the frame assembly is moved toward the folded configuration.

In one example according to the teachings of the present invention, a cam can close an opening into the interior of the first frame part with the frame assembly in the folded configuration.

In one example according to the teachings of the present invention, the one end of the fold link can be connected to a cam of the fold joint.

In one example according to the teachings of the present invention, the frame assembly can include a third frame part coupled to the first frame part at a pivot. A stub portion of the third frame part can extend beyond the pivot and be connected to the opposite end of the fold link.

In one example according to the teachings of the present invention, the stroller can include a stand off connected to and extending forward from the first frame part. A pivot for a third frame part can be carried on a free end of stand off.

In one example according to the teachings of the present invention, a foldable stroller frame assembly is reconfigurable between an in-use frame configuration and a folded frame configuration. The frame assembly can have a fold joint defining a joint pivot, a first frame part connected to the fold joint, and a second frame part connected to the fold joint. The first and second frame parts can be pivotable relative to one another about the joint pivot between a respective in-use orientation in the in-use frame configuration and a folded orientation in the folded frame configuration. A fold link can have one end coupled to a pivot point spaced radially from the joint pivot and can have an opposite end coupled to the first frame part at a connection point spaced from the fold pivot. The fold link can fold part of the frame assembly toward the folded frame configuration as the second frame part is pivoted about the joint pivot toward the first frame part. The fold link can extend lengthwise along an interior portion of the first frame part when the frame assembly is in the in-use configuration.

In one example according to the teachings of the present invention, the first frame part can be a rear leg of the frame assembly and the second frame part can be a push bar of a handle assembly.

In one example according to the teachings of the present invention, an upper end of a rear leg can be connected to the fold joint and a lower end of a handle push bar can be connected to the fold joint.

In one example according to the teachings of the present invention, an upper end of the first frame part can be connected to the fold joint. A cam can be fixed to a portion of the fold joint connected to the second frame part and can move about the joint pivot in concert with movement of the second frame part.

In one example according to the teachings of the present invention, the one end of the fold link can be connected to a cam and the opposite end of the fold link can be connected to a shuttle slidably positioned within the interior of the first frame part.

In one example according to the teachings of the present invention, a stroller frame assembly can have a link slot extending lengthwise along and formed in the opposite end of the fold link, a shuttle positioned and slidable within the interior of the first frame part, and a pin movable with the shuttle and captured in the link slot.

In one example according to the teachings of the present invention, a stroller frame assembly can have a shuttle slot formed through a shuttle in the interior of the first frame part and oriented generally normal to the orientation of a link slot in the opposite end of the fold link. A pin can be connected to the fold link, movable with the shuttle, and captured within the shuttle slot.

In one example according to the teachings of the present invention, a stroller frame assembly can have a curved slot formed through and along the first frame part. A pin can be connected to the fold link and captured in the curved slot.

In one example according to the teachings of the present invention, a stroller frame assembly can have a third frame part pivotally connected to a pivot carried on a free end of a stand off that extends from the first frame part. A stub portion of the third frame part can extend beyond the pivot. A pin can be carried on the stub portion spaced from the pivot.

In one example according to the teachings of the present invention, a stroller fold joint assembly can have a first frame part and a second frame part pivotally connected to the first frame part at a joint pivot so as to be movable relative to one another about the joint pivot between an in-use orientation and a folded orientation. A fold link can have one end coupled to a pivot point spaced radially from the joint pivot and can have an opposite end coupled to the first frame part at a connection point spaced from the joint pivot. A third frame part can be pivotally connected relative to the first and second frame parts and connected to the one end of the fold link. The third frame part can be movable between an in-use orientation and a folded orientation relative to the first frame part. The fold link can move lengthwise within an interior of the first frame part when the first and second frame parts move between the in-use and folded orientations. The fold link can pivot the third frame part toward the folded orientation as the second frame part is pivoted about the joint pivot toward the folded orientation.

### Brief Description of the Drawings

Objects, features, and advantages of the present invention will become apparent upon reading the following description in conjunction with the drawing figures, in which:

FIG. 1 shows a perspective view of one example of a stroller constructed in accordance with the teachings of the present invention, the stroller being shown without soft goods and in an in-use configuration.

FIG. 2 shows the stroller in FIG. 1 with the seat assembly exploded from the frame assembly of the stroller.

FIG. 3 shows a close-up, partial cut away, and inside perspective view of the left side fold joint on the stroller in FIG. 2.

FIG. 4 shows an exploded view of the fold joint in FIG. 3 and part of the seat assembly in FIG. 2.

FIG. 5A shows a perspective and fragmentary cross-section view taken along line V-V of the fold joint in FIG. 2.

FIG. 5B shows a partial cross-section, fragmentary, and phantom view of the fold joint in FIG. 5A.

FIG. 6 shows an outside perspective view of the fold joint in FIG. 3 upon actuation of the fold actuator.

FIG. 7 shows the fold joint in FIG. 5A with the handle moved to a partially folded position.

FIG. 8 shows the fold joint in FIGS. 5A and 7 with the handle moved to a completely folded position and the front and rear leg in a partially folded position.

FIG. 9 shows the fold joint in FIGS. 5A, 7, and 8 with the front and rear leg in a completely folded position.

FIG. 10 shows the frame assembly of the stroller in FIG. 2, minus the seat assembly, in a completely folded configuration.

FIG. 11 shows a perspective view of another example of a stroller constructed in accordance with the teachings of the present invention, the stroller being shown minus the soft goods and in an in-use configuration.

FIG. 12 shows the stroller in FIG. 11 with the seat assembly exploded from the frame assembly.

FIG. 13 shows a close-up, partial cut away, and outside perspective view of the left side fold joint of the stroller in FIG. 12 and in a completely folded condition.

FIG. 14 shows an outside, partial cut away, partial phantom view of the fold joint in FIG. 13.

FIG. 15 shows a perspective view of the stroller in FIG. 11 in a completely folded configuration.

### Detailed Description of the Disclosure

The disclosed foldable stroller assemblies solve or improve upon one or more of the above-noted and/or other problems and disadvantages with prior known strollers. In one example, a foldable stroller is disclosed that has a fold joint with drive components hidden or housed at least partially within the frame structure of the stroller. In one example, the disclosed stroller has a fold joint with a substantially hidden linkage that drives folding of the stroller upon moving the handle from a normal use position to a folded position. In one example, the disclosed stroller has a fold joint with a substantially hidden linkage housed within a frame tube of the stroller frame structure. In one example, the disclosed stroller has fold joints with hidden drive links that drive folding of the stroller.

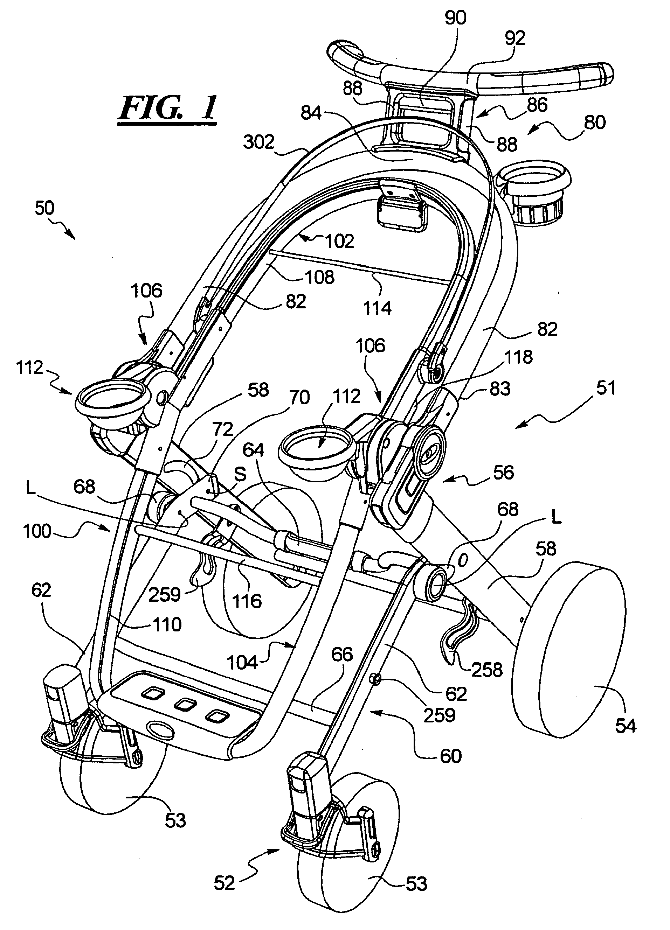

Turning now to the drawings, FIG. 1 shows one example in perspective view of a foldable stroller 50 constructed in accordance with the teachings of the present invention. As described below, the stroller 50 is reconfigurable between an in-use or set-up configuration, as depicted in FIG. 1, and a folded or compact configuration. The disclosed stroller 50 has but one of many alternate frame assembly shapes and configurations that could be employed within the scope of the present invention. In the disclosed example, the stroller 50 has a frame assembly or chassis 51 supported by a pair of front wheels assemblies 52, each having one or more front wheels 53, and a pair of rear wheels 54, each of which can be constructed in a conventional manner. In this example, the frame assembly or chassis 51 has a pair of opposed frame sides, each with a pivotable frame fold joint 56 interconnecting various components of the frame assembly. Each frame side in this example has a rear leg 58 laterally spaced from the rear leg of the other frame side and extending down and angled rearward from the corresponding fold joint 56 on the respective side. A lower end of each rear leg 58 is coupled in a conventional manner to one of the rear wheels 54.

A foldable stroller is conceivable within the scope of the invention that has a different frame structure with no distinct pair of frame sides. It is also conceivable that the disclosed invention could be employed on a stroller with only one frame fold joint or more than two frame fold joints. As noted below, it is also conceivable that the disclosed invention could be employed utilizing an alternate child support structure on the frame assembly, other than a toddler or child seat assembly as described with respect to the examples herein.

In this example, the frame assembly 51 has a front leg assembly 60 that is constructed to form a pair of laterally spaced apart front legs 62. Each front leg 62 extends forward and downward on its respective frame side. Each front leg 62 terminates at a forward end attached in a conventional manner to one of the front wheel assemblies 52. The front leg assembly 60 also includes a transverse cross-bar 64 and a transverse cross-brace 66. The cross-bar 64 interconnects the opposed rear ends of the two front legs 62. The cross-brace 66 is located spaced from both the forward and rear ends of the front legs 62 and extends transversely between the front legs. Each of the front legs 62 is pivotally coupled at a leg pivot L to a stand-off 68 that projects forward from the respective rear leg 58. A leg stub 70 is formed or created at the rearward end of each front leg 62 by a portion of each front leg extending beyond the pivot L. The distal or free end of the stub 70 on each frame side is pivotally connected to the respective rear leg 58 at a pivot S, which is slidable along a curved track or slot 72 on the inner facing side of the respective rear leg.

In the disclosed example, the frame assembly 51 also includes a handle assembly 80 extending upward and rearward from the fold joints 56. The handle assembly 80 generally has a pair of laterally spaced apart push bars 82, one coinciding with each frame side. Each push bar 82 has a lower end 83 joined to a respective one of the fold joints 56 as described below. The handle assembly 80 is a continuous U-shaped structure including the two push bars 82 and a curved top or end bar 84, which extends transversely between and connects the upper ends of the push bars 82. In the disclosed example, a stanchion assembly 86 extends upward and rearward from the end bar 84 of the handle assembly 80. The stanchion assembly 86 has a pair of laterally spaced apart connector columns 88, which project further rearward away from the end bar 84. A latch actuator or fold actuator 90 is positioned between the columns 88 and spaced from the end bar 84. A handle bar 92 or handle is coupled to the distal ends of the columns 88 and spaced from the end bar 84. In this example, the actuator 90 is carried on an underside of the handle bar 92 between the stanchion columns 88.

In general, the actuator 90 can be pulled by a user inward or upward into the handle bar 92. This movement of the actuator 90 can pull on cables (discussed below) running from the actuator, through the stanchion assembly 86, the end bar 84, and push bars 82, to the fold joints 56. The cables release latches in the fold joints (also discussed below). Upon release of the latches, the stroller frame assembly 51 can be folded. The fold joints 56 and release of same is described in greater detail below.

In this example, the handle bar 92 is generally C-shaped with an arcuate or curved configuration. The curvature is arranged so that the handle bar 92 is concave toward the direction of the back end of the frame assembly 51. Any part of the handle bar 92 may be grasped by the caregiver to push the stroller. The concave curvature of the handle bar 92 also allows the caregiver to step forward, closer to the stroller, and thus closer to the child seat occupant, during use of the stroller 50. The shape, configuration, and construction of the handle bar 92 and the actuator 90 can vary and yet function satisfactorily for the purposes of the disclosed invention. For example, the handle bar 92 can be a linear element, be a multi-part structure, have an oval hoop shape, employ umbrella-type handles, or be an otherwise complexly curved structure. In addition, the actuator 90 can be placed on the end bar 84, on or between the columns 88, on a different part of the handle bar 92, or the like. Further, the actuator 90 can require a rotary action, a linear pull or squeeze, can be a pivoting lever, or the like. Various forms of these types of actuators are known in the stroller art.

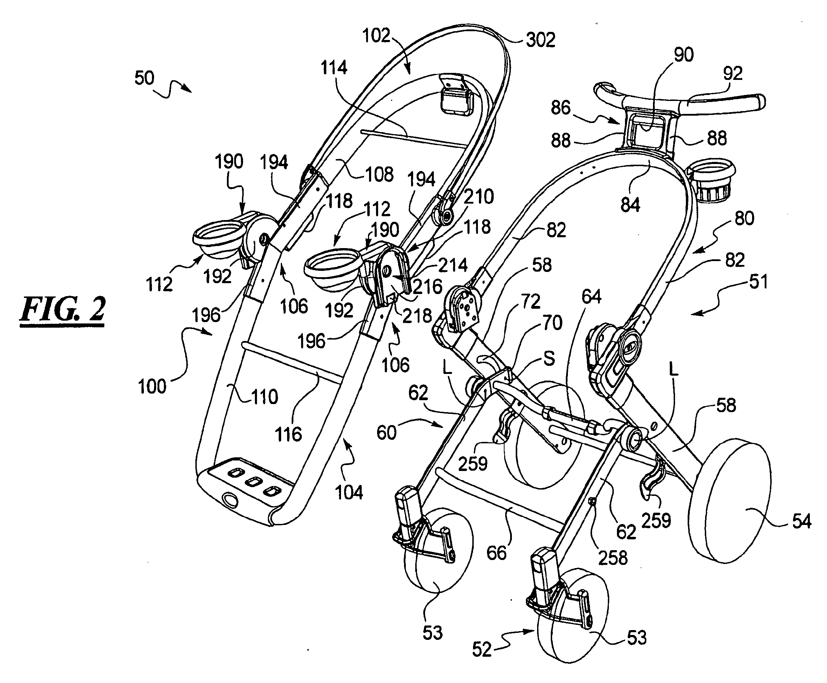

As shown in FIGS. 1 and 2, the stroller assembly 50 in this example has a removable child support structure 100 in the form of a toddler seat or seat assembly. The seat assembly 100 can be attached to and removed or detached from the frame assembly in this example. Thus, the child support structure is repositionable between two positions or states: 1) a usable state, as in FIG. 1, as a seat to support a child on the frame assembly 51 in the in-use configuration; and 2) an unusable state, as in FIG. 2, detached or removed from the frame assembly 51 and thus not usable as a seat on the frame assembly. The seat assembly 100 depicted herein is shown without soft goods. In use, the seat would have a seat structure defining a seat back and seat bottom as commonly known in the art for such a toddler-type seat. The seat assembly 100 is removable and can be reversible in this example. The seat assembly 100 can thus be installed on the frame assembly 51 in a forward facing or normal use orientation represented in FIG. 1 or in a reverse or rear facing orientation where the seat occupant would face rearward toward the handle bar 92. The seat is not shown herein in the reverse orientation, but for the purposes of the present invention would function essentially in the same manner. In this example, the seat assembly 100 is not a foldable structure and thus is to be removed prior to folding the frame assembly 51.

The seat assembly 100 is best illustrated in FIG. 2 and has an upper seat frame 102, a lower seat frame 104, and a pair of connecting structures 106 located on the opposed sides of the assembly. The connecting structures 106 connect the upper and lower frames 102, 104 to one another and also connect the seat assembly 100 to the stroller frame 51. In general, the upper frame 102 would support and/or define a seat back part in conjunction with other components (not shown) of the seat assembly. Similarly, the lower seat 104 would support and/or define a seat bottom part in conjunction with other components (not shown) of the seat assembly. In this example, each of the seat frames is a U-shaped structure. The upper frame 102 generally follows the contour of, but is sized to nest within, the handle assembly 80. The upper seat frame 102 has a pair of spaced apart frame legs 108 that terminate at lower ends, which connect to the respective connecting structures 106. Similarly, the lower seat frame 104 has a pair of spaced apart frame legs 110 that terminate at upper ends, which also connect to the respective connecting structures 106.

In the disclosed example, a cupholder assembly 112 is connected to and extends forward from a respective one of the connecting structures 106. These cupholders 112 are optional and can be eliminated or can be replaced by some other structure such as an arm bar, a child tray, or the like. In addition, the upper seat frame 102 has a cross-member 114 extending between the frame legs 108. The lower seat frame 104 has a similar cross-member 116 extending between the frame legs 110. These cross-members 114, 116 can optionally support portions of a seat back and seat bottom, respectively, during use of the seat assembly and can provide rigidity and strength to the overall seat structure. The seat assembly 100 also has a pair of release buttons 118. One of the release buttons 118 is positioned on the underside of each of the connecting structures 106 adjacent the corresponding frame legs 108. The release buttons 118 are actuated to remove the seat assembly 100 from the frame assembly 51 as represented in FIG. 2.

The seat assembly 100, including the upper and lower frames 102, 104, the connecting structures 106, and the release buttons 118, can vary in configuration and construction within the scope of the present invention. The overall shape of the seat can also vary. The shape and configuration of the connecting structures 106, as well as the location and function of the release buttons 118, can also vary. In addition, the seat assembly 100 in this example, as well as the seat assembly in the subsequent example disclosed herein, can be replaced by other child support structures. For example, an infant car seat adapter for mounting a car seat, carrier, or carry cot can be attached to the frame assembly 51 in place of the seat assembly 100. Alternatively, a direct mount car seat, carrier, carry cot, or other child support structure can be attached to the frame assembly in the same or a similar manner as the seat assembly 100 described herein.

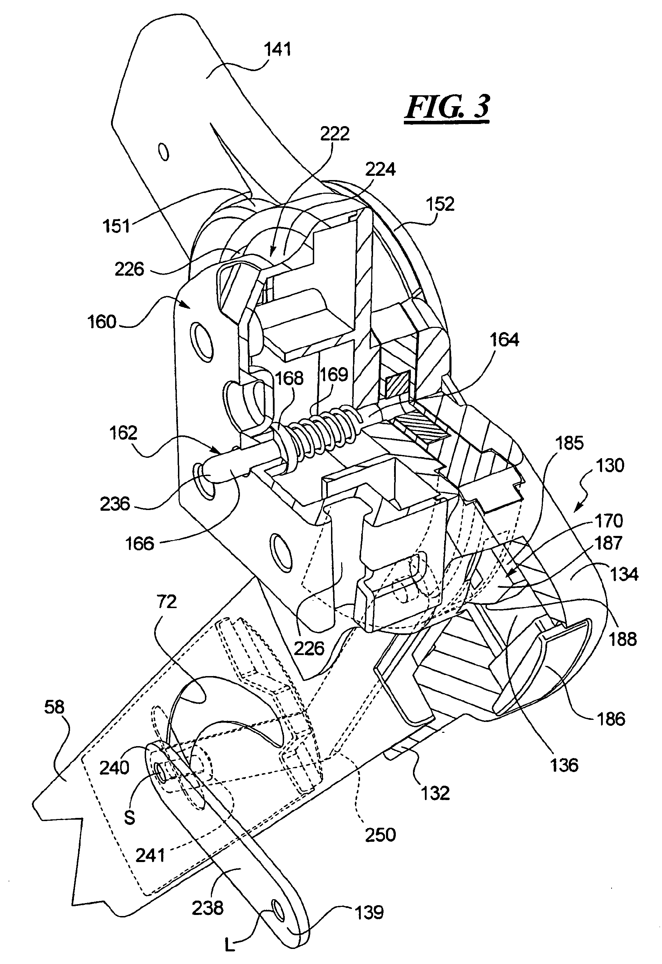

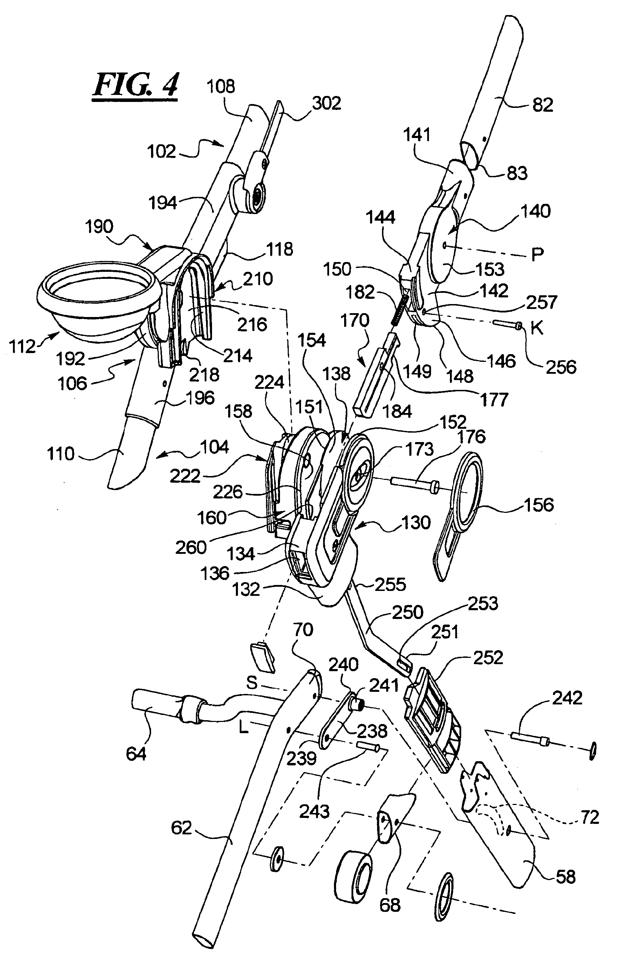

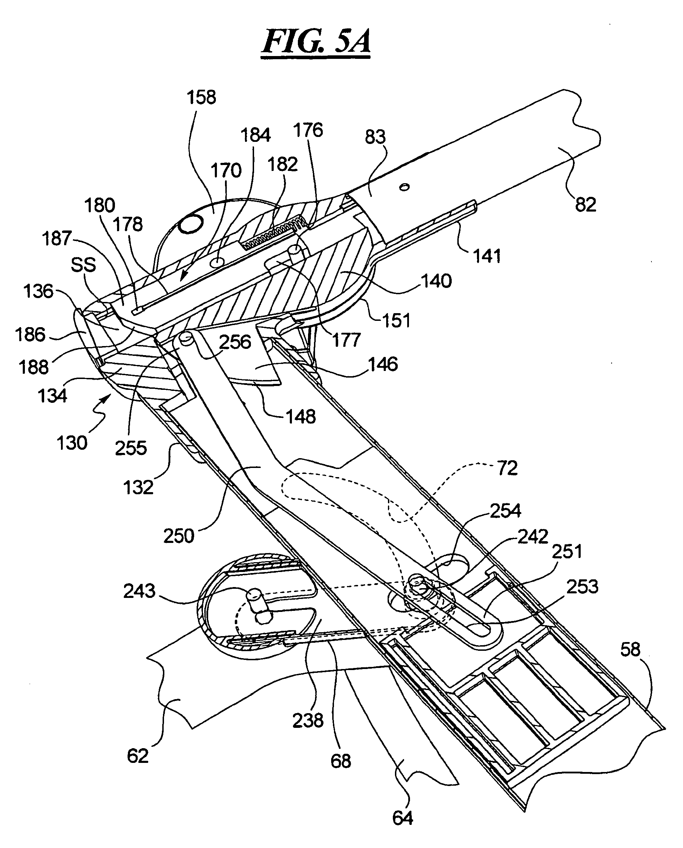

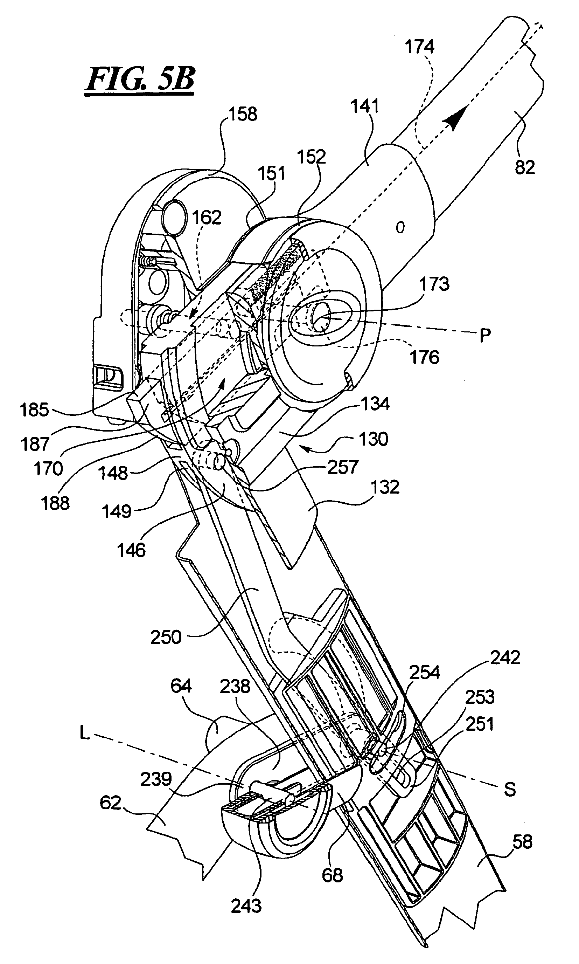

FIG. 3 shows a close-up view of the left side fold joint 56 of the frame assembly 51 with the seat assembly 100 removed. The right side fold joint 56 is essentially identical and thus will not be described in detail herein. The description of the left side fold joint provided below is equally applicable to the right side joint. FIG. 4 shows an exploded view of the left side fold joint 56 and the connecting structure 106 of the seat assembly 100 and depicts the major components for each. FIGS. 5A and 5B show cut-away sections of the assembled fold joint 56. Each of these figures shows the components in the set-up configuration of the stroller as in FIGS. 1 and 2. The terms inward, inner, inside, and the like are used herein to refer to the side of a component positioned, arranged, oriented, or facing the middle of the stroller (i.e., toward the other side of the stroller frame). The terms outer, outward, outside, and the like are used herein to refer to the side of a component positioned, arranged, oriented, or facing the exterior of the stroller frame or away from the stroller.

With reference to FIGS. 3-5B, the fold joint 56 generally has a joint housing 130 with a lower or leg connector 132 configured to mate with and connect to the rear leg 58. The lower connector 132 forms a fixed joint to the rear leg and maintains a static orientation between the rear leg and the joint housing 130 in this example. The connection can vary but in one example the rear leg 58 and the leg connector 132 can be telescopically joined and then fastened to one another. The joint housing 130 also has a housing section 134 from which the lower connector 132 extends. The housing section 134 is generally hollow on its interior and defines a lengthwise slot or receptacle 136 along its length. The joint housing 130 also defines a main pivot axis P or joint pivot that extends transversely through the housing. A rear end of the slot or receptacle 136 enters a space 138 between opposed sides of the joint housing 130 centered on the pivot axis P.

A puck 140 is attached via a handle or upper connector 141 to the lower end of the push bar 82. A hatchet shaped cam 142 extends from an edge of the puck 140 opposite the connector 141. A top surface 144 of the cam 142 is essentially flat, as are the opposed side faces of both the cam and the puck 140. An extension 146 of the cam 142 extends downward and has a link space or slot 149 into the end of the cam in the extension. A curved end surface 148 on the cam has a generally constant radius relative to the pivot axis P in this example. A latch-receiving bore 150 is formed into the end face 148 and extends through the cam 142, the puck 140, and the connector 141, and lengthwise into the push bar 82. The bore 150 is generally aligned with the axis of the push bar 82.

A pair of bearing plates 151 and 152 is spaced apart from one another, extends from the joint housing 130, and defines the space 138 therebetween. The outer bearing plate 152 of the pair creates a circular outer bearing surface that surrounds the pivot axis P on the outer side of the housing. The outer bearing surface (not shown) bears against an outer face 153 on the puck 142 when the joint 56 is assembled. A similar inner bearing surface 154 is defined on the inner bearing plate 151 of the pair on the housing 130. The inner bearing surface 154 also surrounds the pivot axis P on the inner side of the housing 130 and bears against an inner face (not shown) on the opposite side of the puck 142 in the assembled joint. An outer cover plate 156 can be secured over the exterior surface of the joint housing 130. The cover plate 156 can be for decorative purposes and/or can cover fasteners used to assemble the joint housing 130 and the fold joint 56.

A shell section 158 is carried on an inner side of the joint housing 130 and adjacent the inner bearing surface 154. A shell cover 160 is secured to the shell section 158 and creates a cavity within a shell when assembled. The shell cover 160 defines the inner boundary of the fold joint 56 in this example. The shell section 158 and shell cover 160 contain therein an optional interlock or lock pin 162 in the cavity when assembled. The lock pin 162 has a locking end 164 on the outward side and has a contact end 166 on the inward side of the pin. A fixed or integral washer 168 is positioned on a shaft of the pin 162 and differentiates the two ends of the locking pin. A pin spring 169 is received over the locking end 164 and bears against the washer 168 when assembled. The other end of the pin spring 169 bears against an inside surface of the shell section 158 and biases the lock pin in an inward direction toward and protruding through the shell cover 160.

A latch finger 170 is aligned with and received in the latch bore 150 of the cam 142. A puck bore 172 is located at the center of the puck 140 and is aligned with the pivot axis P when the joint is assembled. Likewise, a plate bore 173 is formed through each of the bearing plates on the housing and is also aligned with the axis P. The puck 140 seats in the space 138 between the surfaces 152, 154 of the housing plates with the puck bore 172 aligned with the plate bores 173 on the axis P. A main pivot pin 176 is received through the puck bore 172 and the cam bearing plate bores 173. The fold joint main pivot axis P is defined by the pin 176. As depicted in FIG. 4, the underside of the latch finger 170 has a travel limiter in the form of an elongate notch 177 formed up into the finger. The main pivot pin 176 is captured in the notch 177 as shown in FIG. 5A.

A pull cable 174 with a slug (not shown) on one end is routed from the earlier described actuator 90, through the handle assembly 80 along the push bar 82, and into the joint housing 130. The cable 174 is seated in a cable slot 178 extending lengthwise along the latch finger 170. The slug seats within a slug receiver 180 positioned at the end of the cable slot 178 to secure the cable to the latch finger 170. A latch spring 182 is positioned at a cable end 183 on the latch finger 170. One end of the spring 182 bears against the latch finger 170 and the other end bears against a fixed surface within the latch bore 150. The spring 182 biases the latch finger 170 in a direction away or outward from the lower end 83 of the push bar 82 and toward the end of the cam 142. The latch finger 170 has an interlock hole 184 formed through the finger in this example. A cap 186 covers the open end of the slot 136 in the joint housing 130 opposite the puck 140.

The free end 187 of the latch finger 170 is flat on a top surface 185 and curved or angled on an end surface 188. With the frame assembly 51 in the set-up configuration, the free end 187 of the latch finger 170 protrudes into the slot 136 of the joint housing 130. The flat top surface 185 at the free end 187 bears against a surface SS within the slot 136 as shown in FIG. 5A. The latch finger 170 is prevented from pivoting upward without first withdrawing the latch finger to clear the free end 187 from the slot 136 in the housing 130, as described below. This arrangement retains the push bar in the setup orientation.

The connecting structure 106 of the seat assembly 100 generally has a frame connector 190 with a center hub 192, an upper connector 194 extending radially from the hub, and a lower connector 196 extending radially from the hub in a direction generally opposite the upper connector. The upper connector 194 is configured to connect with a free end of the seat frame leg 108. As with the rear leg 58 to housing connector 132 joint described above, the upper connector 194 can vary in construction, but in one example can have a portion telescopically received in an open end of the seat frame leg 108. Fasteners can be used to secure the two components together. Similarly, the lower connector 196 is configured to connect and fasten to a free end of the seat frame leg 110, but can also vary from the example shown.

In this example, the release button 118 is received in a slot (not shown) under the upper connector 194. The seat assembly 100 has a seat mount 210, which in this example is positioned on the center hub 192. The seat mount 210 has an outer side with an inverted, U-shaped, female coupling 214 that surrounds on three sides a generally flat face 216 of the mount. The coupling 214 is open at the bottom of the seat mount. A chamfer or ramp 218 is disposed at an open bottom edge of the flat face 216. A seat or male connector 222 projects from the exterior, but inner facing, side of the shell cover 160. In this example, the seat connector 222 defines a mounting point for attaching the seat assembly 100 or other child support structure to the frame assembly 51. The male connector 222 has a complementary U shape to engage and seat within the coupling 214 of the seat mount 210. The male connector 222 has a rounded top 224 and linear sides 226 permitting the seat mount 210 to be lowered onto the connector. The button 118 can actuate or release a seat lock or latch (not shown herein) that secures the seat coupling 214 to the connector 222 on the shell cover 160. The seat assembly can be latched to the seat connectors 222 when installed and be released therefrom by actuating the buttons 118.

The cupholder 112 is connected in this example to the seat mount 210, but can be eliminated or attached to another component such as one of the frame connectors 194, 196. The cupholder 112, or a portion thereof, can be integrally formed as a part of one of these components or can be separately attached.

As depicted in FIG. 3, the latch finger 170 cannot be released and the frame assembly 51 in this example cannot be folded while the seat assembly 100 is installed on the stroller 50. The lock pin 162 and the face 216 on the seat mount 210 each act as part of an interlock mechanism in this example. The lock pin 162 and face 216 cooperate with one another to prevent actuation of the fold latch by locking the latch finger 170 in the latched position. With the frame assembly 51 in the set-up configuration and the seat assembly 100 mounted to the fold joint 56, the flat face 216 on the seat mount 210 bears against the contact end 166 of the pin 162. The pin is forced outward against the bias force of the pin spring 169. In this locked state or position, the locking end 164 of the pin 162 is aligned with and seats through the hole 184 in the latch finger 170. With the seat assembly 100 mounted to the stroller, the latch finger 170 cannot move. Even if the user were to attempt to actuate the actuator 90, which would pull on the cable 174 and the latch finger 170, the locking end 164 of the pin 162 would prevent movement of the latch finger.

In order to fold the frame assembly 51, a user must first remove the seat assembly 100 from the stroller 50. To do so, a user pulls upward on the release button 118 to disengage the seat or female coupling 214 from the male connector 222. Once unlatched or released, the seat mount 210 can be lifted from the seat connector 222 on the shell cover 160. When the flat face 216 of the seat mounts 210 clears the contact end 166 of the respective lock pin 162, the pin spring 169 will fire the lock pin 162 inward through the shell cover 160. The locking end 164 of the pin 162 then withdraws from the hole 184 in the latch finger 170. This unlocked state or position is shown in FIG. 3. With reference to FIG. 3, the tip 236 on the contact ends 166 of the lock pin 162 is rounded for purposes to be discussed shortly hereafter.

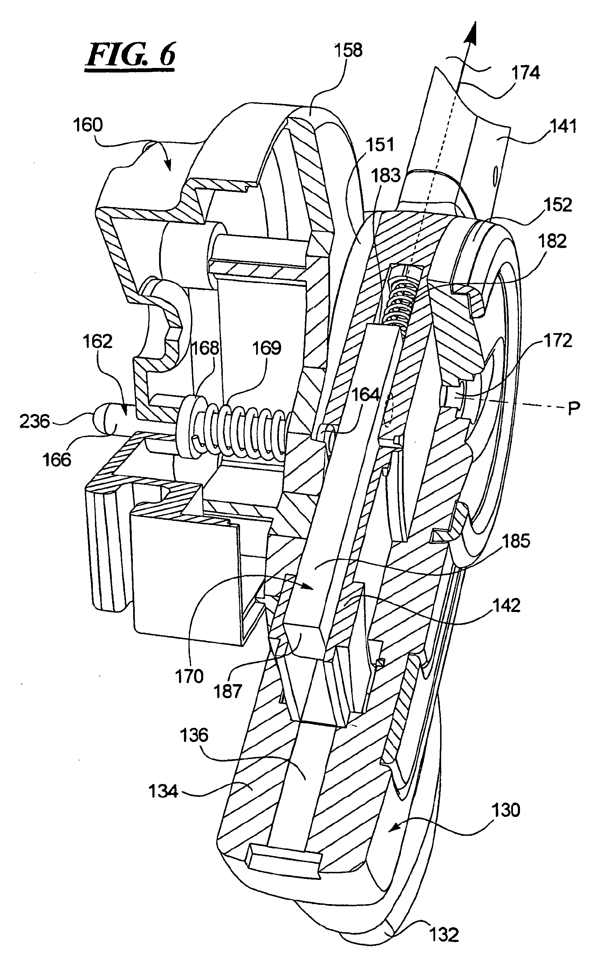

With the pin 162 free of the hole 184 in the latch finger 170, the user is then free to manipulate the actuator 90, which in turn pulls on the cable 174. As shown in FIG. 6, the cable withdraws the latch finger 170 toward or into the lower end 83 of the push bar 82 against the force of the latch spring 182. As described above, the free end 187 of the latch finger 170 clears the housing body and the surface SS within the slot 136 allowing the fold joint 56 to pivot or fold. To fold the stroller frame assembly 51, the user pushes the handle assembly 80 downward toward the rear legs 58. The handle assembly 80, and particularly the push bars 82, pivots about the main pivot axis P on the fold joints 56. The travel limiter notch 177 can be sized to stop travel of the latch finger 170 in each direction, i.e., the latched direction and the released or unlatched direction, by the pivot pin 176 hitting either end of the notch. The notch 177 can also be sized to align the locking hole 184 with the locking pin 162 in the latched position.

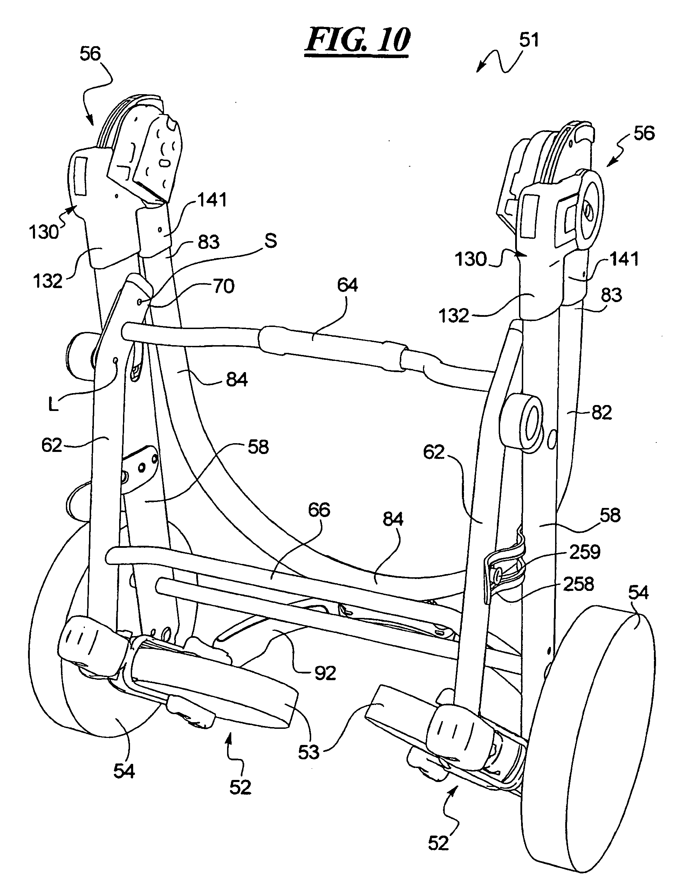

In accordance with the teachings of the present invention, and with reference to the left side fold joint 56 shown in FIGS. 4, 5A, 5B, and 7-9, the frame assembly 51 of the stroller 50 can be reconfigurable between an in-use frame configuration (FIGS. 1 and 2) and a folded frame configuration (FIG. 10). The frame assembly can employ a first frame part and a second frame part that are movable between respective in-use positions and folded positions relative to one another that correspond to the in-use and folded frame configurations. In the disclosed example, the first frame part can be a rear leg 58 and the second frame part can be a push bar 82 of the handle assembly. The fold joint 56 can be connected to the first frame part and to the second frame part, such as is described above. The fold joint 56 can have a joint pivot, such as the main pivot P, about which the first and second frame parts pivot relative to one another between the respective in-use and folded positions. As described below, a fold link can have one end coupled to part of the frame fold joint at a pivot point that is spaced from the joint pivot and can have an opposite end coupled to the first frame part at a connection point spaced from the fold pivot. When the second frame part is pivoted from the in-use position toward the folded position, the fold link can drive movement of part of the frame assembly toward the folded frame configuration. In one example, the driven part can be a third frame part, such as the front leg 62.

The fold link as disclosed herein can be hidden within an interior of the first frame part with the frame assembly in the in-use configuration. The frame assembly can have left and right sides, as described above. Each of the frame sides can have one of the first and second frame parts, one of the fold joints, one of the fold links, and one of the driven frame parts. The fold link can have one end coupled to a pivot point spaced radially from the joint pivot and can have an opposite end coupled to the first frame part at a connection point spaced from the fold pivot or joint pivot. The fold link can fold the first frame part and/or another frame part toward the folded orientation as the second frame part is pivoted about the joint pivot. The fold link can extend lengthwise along an interior portion of the first frame part when the frame assembly is in the in-use configuration. A third frame part of the stroller can be pivotally connected relative to the first and second frame parts and connected to the one end of the fold link. The third frame part can be movable between an in-use orientation and a folded orientation relative to the first frame part. The fold link can move lengthwise within the interior of the first frame part when the first and second frame parts move between the in-use and folded orientations. The fold link can pivot the third frame part toward the folded orientation as the second frame part is pivoted about the joint pivot toward the folded orientation.

In one example, a fold link 250 is housed within the rear leg 58. The fold link has a lower end 251 pivotally connected to a slidable shuttle 252 that is also housed within and slidable lengthwise along the interior of the hollow rear leg. The lower end 251 of the link 250 is slidably and pivotally connected to the shuttle 252. In this example, the link's lower end 251 has an elongate link slot 253 formed lengthwise along the link and relative to the leg 58. The shuttle 252 also has an elongate slot 254 through the shuttle body. The shuttle slot 254 is oriented normal or perpendicular to a lengthwise axis of the rear leg 58 and, thus, generally normal to the link slot 253.

A spacer link 238 is mounted to the front leg stub 70 between the front leg 62 and the rear leg 58. The spacer link 238 has one end 239 fixed to the leg stub 70. Both the spacer link 238 and stub 70 are pivotally connected at the leg pivot L to the stand off 68 by a pivot pin 243. The opposite end 240 of the spacer link 238 is fixed to the leg stub 70 at the pivot S near the end of the stub. The spacer link 238 is thus fixed to the stub 70 and moves in concert with the stub about the leg pivot L. A boss 241 protrudes laterally outward from the end 240 of the spacer link 238 and projects into the rear leg 58 through the curved slot 72 in the side of the leg. A shuttle pin 242 extends through the shuttle slot 254, the link slot 253, the curved slot 72 in the leg 58, and the boss 241. The pin 242 links these components together, but can slide within or along the shuttle slot 254, the link slot 253, and the curved slot 72, as described below. In the in-use configuration and latched condition, the shuttle pin 242 seats at the uppermost end of the link slot 253, the lowermost end of the curved slot 72, and the forward end of the shuttle slot 254.

The other, upper end 255 of the link 250 is pivotally coupled to the cam 142 at a pivot K defined by a pin 256 received through an aperture 257 in the cam extension 148. The pivot K is located just below the latch bore 150 and is spaced radially from the handle pivot or main pivot axis P. The puck 140 and the cam 142 in this example are seated between the spaced apart inner and outer plates 151, 152. The link 250 is movably positioned in the space 138 between the two plates and further within the slot 149 in the cam extension 148. As the user pushes down on the handle assembly 80, the cam 142 pivots upward about the axis P from within the hollow end of the rear leg 58. Movement of the handle assembly 80 moves the cam 142, which in turn moves the link 250 and thus the shuttle 252, as described below.

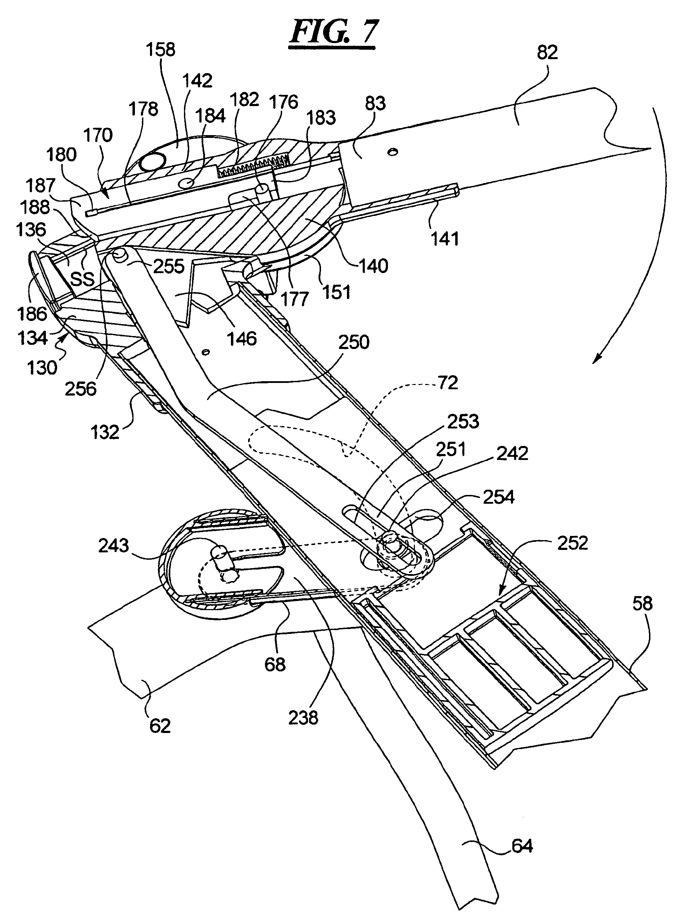

With reference to FIGS. 6 and 7, with the latch finger 170 unlatched, the handle assembly 80 is free to rotate downward about the pivot axis P from the unfolded or in-use position toward the rear leg 58. The cam 142 and pin 256 pull the fold link 250 upward within the hollow interior of the rear leg 58 as the handle assembly 80 rotates. The handle assembly 80 will travel downward and the link 250 will move up a predetermined distance until the bottom end of the link slot 253 hits the shuttle pin 242. As the handle assembly 80 is rotated further downward toward the rear leg 58, the link 250 will pull the pin 242 upward, which drives upward movement of the shuttle 252 within the rear leg 58. Since the shuttle pin 242 is connected to the leg stub 70 at the pivot S, the leg stub will begin to rotate about the leg pivot L with the boss 241 of the spacer link 238 sliding upward along the curved slot 72.

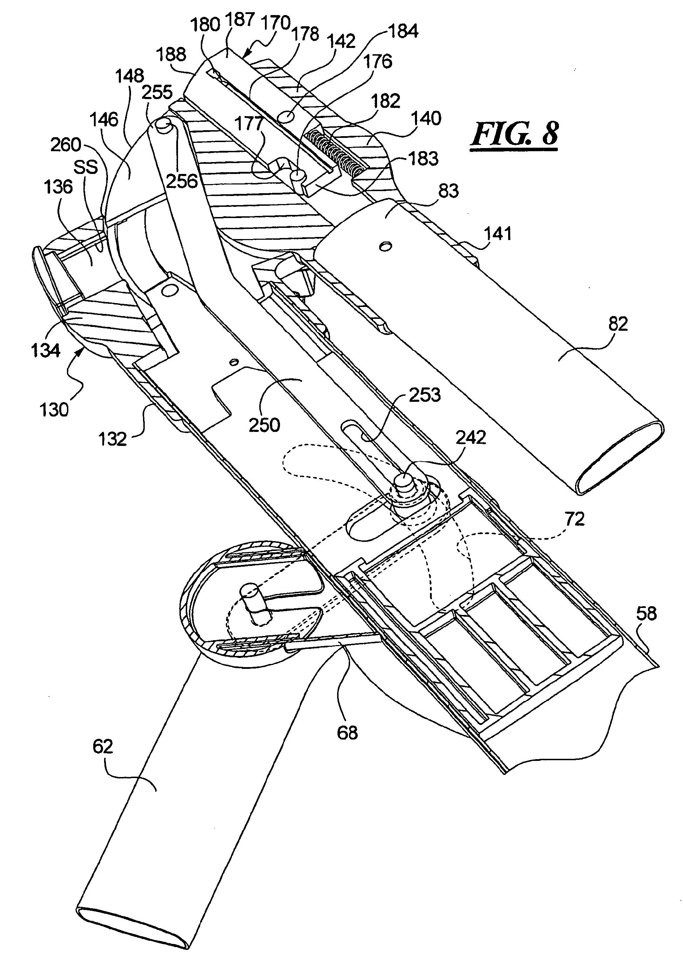

As the leg stub 70 moves, the front leg 62 rotates about the leg pivot L downward and inward toward the rear leg 58 as shown in FIG. 8. The curved slot 72 extends lengthwise along the leg 58, but curves end-to-end so that the slot does not lie along the leg axis. In this example, the shuttle pin 242 is free to translate within the shuttle slot 254, and thus can travel along and follow the curved slot 72. Both the link 250 and the stub end 70 of the front leg also follow the path of the track or slot 72. Also in this example, the handle assembly 80 and the push bar 82 are in a stowed or fully folded position when adjacent and generally parallel to the rear leg 58. However, in this example, the front leg 62 has not yet fully folded rearward toward the rear leg 58 when the handle assembly is fully folded downward. Further, the shuttle pin 242 is only about half way up the curved slot 72 and is still bottomed out at the lower end of the link slot 253. This component arrangement retains the front and rear legs 62, 58 and, thus, the front and rear wheels 53, 54 spaced apart from one another during folding. The frame assembly 51 thus can remain relatively stable resting on the wheels 53, 54 as the handle assembly 80 is folded.

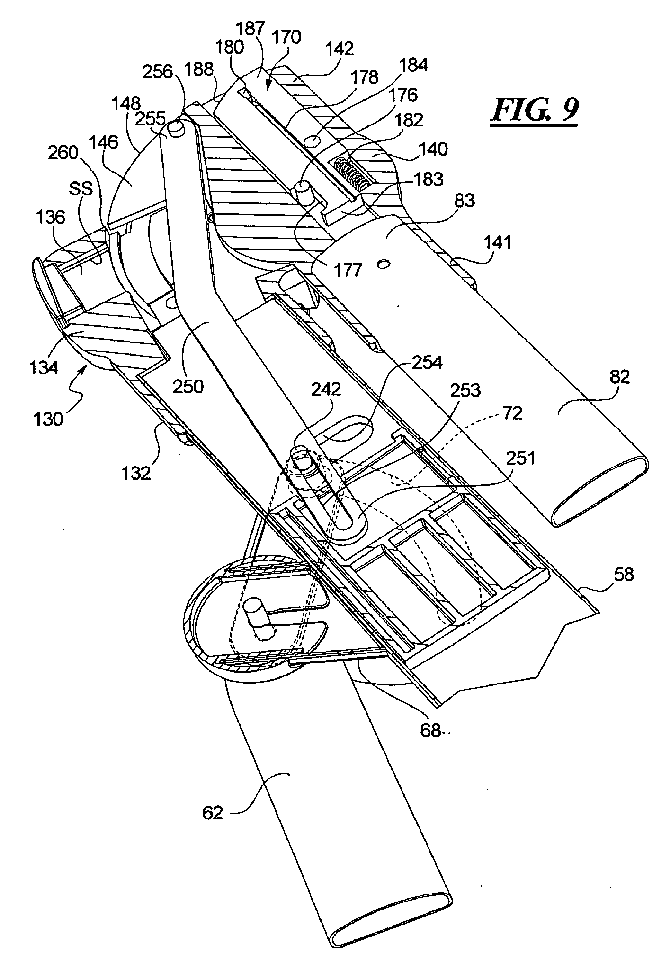

With reference to FIGS. 8 and 9, the front and rear legs 62, 58, respectively, can rotate further toward one another after the handle assembly 80 is fully folded. The shuttle pin 242 can move further upward within the curved slot 72 and within the link slot 253 until reaching the completely folded configuration. The legs 58, 62 can abut one another, the pin 242 can bottom within the curved slot 72, and/or the pin can contact the top end of the link slot 253 when the frame assembly 51 is completely folded. If a user lifts the stroller frame assembly 51 upward, gravity can force the front and rear legs 62, 58 together from the position in FIG. 8 to the position in FIG. 9. Alternatively, a user can manually push the legs 58, 62 together to completely fold the frame assembly 51. As a result of pushing down on the handle assembly 80, and then either lifting the frame assembly 51 or pushing the legs together, the front leg 62 pivots downward and rearward toward the rear leg 58 and the handle assembly 80 pivots downward toward the rear legs to the compact, completely folded configuration in FIG. 10.

The primary fold components, and in particular the hidden link 250, the shuttle 242, and the cam 142, are completely hidden from view in the in-use configuration and are internally contained within the stroller structure. The front leg stub 70 is the only visible fold joint component and is relatively short, discretely hidden adjacent and by the rear leg 58, and thus not readily apparent as part of the fold mechanism. The disclosed fold joint 56 and fold component arrangement significantly reduce the existence of shear or pinch points while folding or unfolding the frame assembly 51. The primary fold joint parts are contained within the housing 130, within the rear leg 58, and/or between surfaces of the cam 142 at all times. Only the leg stub 70 and the slot 72 are exposed at all times. The cam 142 is exposed during folding and in the folded configuration. However, the exposed cam surfaces are flat and do not expose or create any pinch points. The slot 72 can be backed entirely, such as in this example, by a surface of the shuttle as it slides within the leg 58 to further minimize any pinch points at the stub 70 to leg 58 connection. The cam 142 can be shaped and sized to seat fully within, and thus be completely hidden within the hollow end of the rear leg 58 with the frame assembly 51 in the in-use configuration. The cam 142 in this example can also be sized and shaped to block the exposed end of the hollow rear leg 58 with the frame assembly 51 in the folded configuration to further minimize and pinch or shear points. In this example, the joint housing 130 covers the top open end of the rear leg 58. The slot 136 and space 138 remain open to allow travel of the link 250 upward and outward during folding. The cam 142 closes off the opening into the rear leg 58 created by the slot and space in the housing 130 during use in this example.

With the frame assembly in the folded configuration of FIG. 10, the seat assembly 100 cannot be reinstalled in this example. The interlock mechanism is retained in the unlocked state, preventing attachment of the seat mount 210. The contact end 166 of the lock pin 162 blocks attachment of the seat mount 210 to the seat connector 222. The locking end 164 of the lock pin 162 is borne against a side bearing face of the cam 142 and is blocked from outward movement. The frame 51 must first be unfolded to the set-up configuration in FIG. 2 and the latch must then be latched. In this example, the frame assembly can include a storage latch. As shown in FIGS. 1 and 10, a conventional storage latch can be employed to retain the frame assembly 51 in the folded configuration. For example, the storage latch can include a plastic, flexible latch or catch arm 258 mounted to one of the rear legs 58 and a catch pin 259 projecting from the corresponding front leg 62. The catch arm 258 can engage the catch pin 259 when the frame assembly is folded, either manually or automatically, and can be manually released in order to unfold the frame assembly, as is known in the art.

When the stroller frame 51 is unfolded and the handle assembly 80 is raised to near the in-use position, the latch finger 170 is in the latched position protruding from the bore 150 in the cam 142. However, the curved end surface 188 of the latch finger 170 will bear against an edge 260 near the surface SS in the slot 136 of the housing body at the end of the space 138. This surface to surface engagement temporarily forces the latch finger 170 against the bias of the latch spring 182 and back into the bore 150. Once the slot 136 aligns with the bore 150 and, thus, the finger 170, the latch finger will fire by force of the latch spring 182 back into the slot 136 under the surface SS of the housing 130 and again retain the frame assembly 51 in the in-use configuration.

Once in this unfolded and latched configuration, the hole 184 and the pin 162 are again aligned with one another as in FIGS. 3 and 5B. The pin 162 is still retained in the unlocked position, however, by force of the pin spring 169. The seat mount 210 can be lowered onto the male connector 222. The rounded tip 236 of the lock pin 162 will bear against and ride along the chamfer 218 and then onto the face 216 as the seat mount 210 is lowered. The chamfer 218 and face 216 will drive the locking pin 162 against the biasing force of the spring 169 back into the shell cover 160, which in turn drives the pin into the hole 184 of the latch finger 170. The seat assembly 100 and the interlock mechanism will again prevent the fold joints 56 from being unlatched. The frame assembly 51 cannot be folded until the seat is removed, as discussed above.

In the above example, the interlock mechanism incorporates the chamfer 218 and face 216 of the seat mount 210, the locking pin 162, the pin spring 169, a bearing face of the cam 142, and the hole 184 in the latch finger 170. Once the seat assembly is removed and thus in an unusable state, the interlock mechanism fires to the unlocked state or position. This in turn unlocks the latch finger so that the fold joint 56 can be folded. The seat assembly 100 cannot be installed on the frame assembly while the frame assembly is unfolded. The pin 162 position of interlock mechanism prevents such seat reattachment. The interlock mechanism thus adds a degree of safety to the stroller 50 be requiring the seat assembly to be removed in this example before folding the frame assembly 51 and by not allowing the seat assembly to be re-attached until the frame assembly is unfolded and locked. Thus, a child cannot remain seated in the seat while the stroller 50 is folded. The interlock mechanism is an optional feature that need not be utilized in conjunction with the hidden fold linkage aspect of the invention. Alternately, the interlock mechanism can vary from the example shown and described herein, as will become evident to those of ordinary skill in the art upon reading this disclosure.

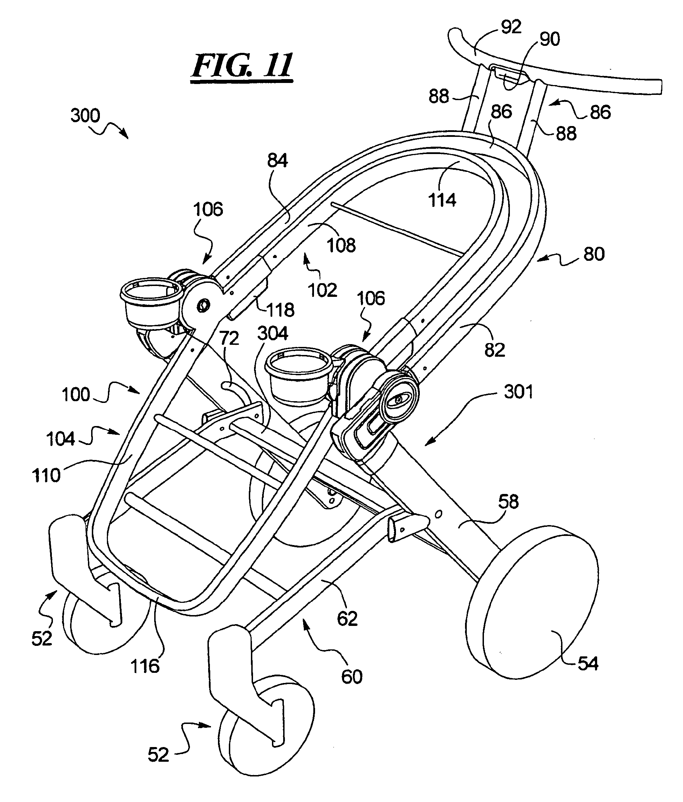

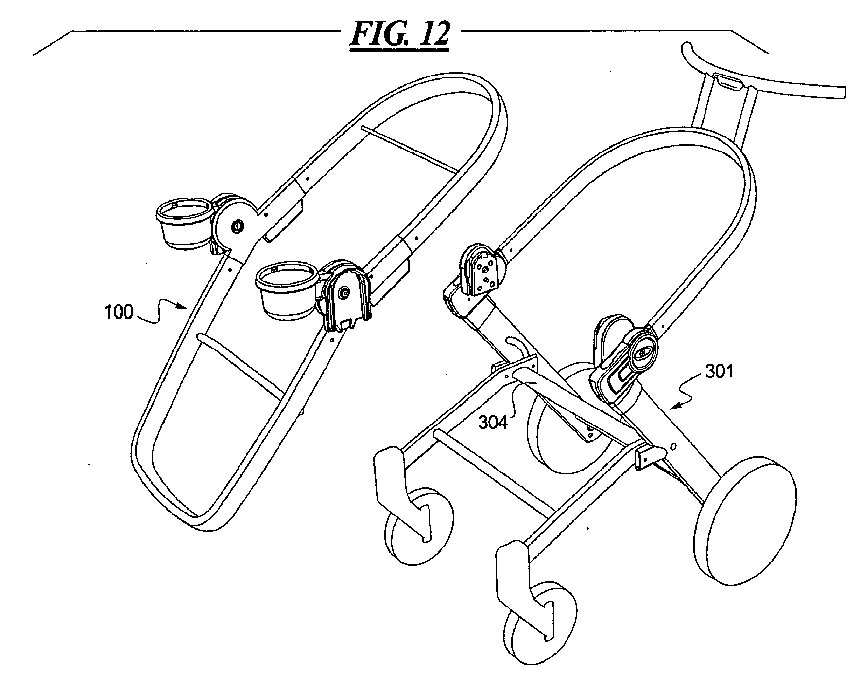

The hidden fold link arrangement can also vary in configuration and construction from the example disclosed and described above, as can the configuration of the stroller 50 and frame assembly 51. FIGS. 11 and 12 show another example of a foldable stroller 300 constructed in accordance with the teachings of the present invention and in an in-use or set-up configuration. In this example, the stroller 300 has a frame assembly 301 that is substantially the same as the frame assembly 51 described above with respect to the stroller 50. Thus, when describing aspects of the stroller 300, the same reference names and reference numbers are utilized. New reference numbers are used only to introduce elements that are different from the earlier example. The stroller 300 in this example has a removable seat assembly 100 as the child support structure, also shown minus the soft goods. Only an optional canopy support bar 302 from the first example has been removed in this example. FIG. 12 shows the seat assembly 100 removed from the frame assembly 301.

In this example, the front leg assembly 60 has an alternate configured top cross-bar 304. This change shows just one small example of how the stroller frame assemblies 51, 301 can be altered without departing from the scope of the present invention. Also, the spacer link 238 between the leg stub 70 and the slot 72 in the rear leg 58 has been eliminated. This change shows just one other small example as to how the hidden fold linkage components can be altered within the scope of the present invention.

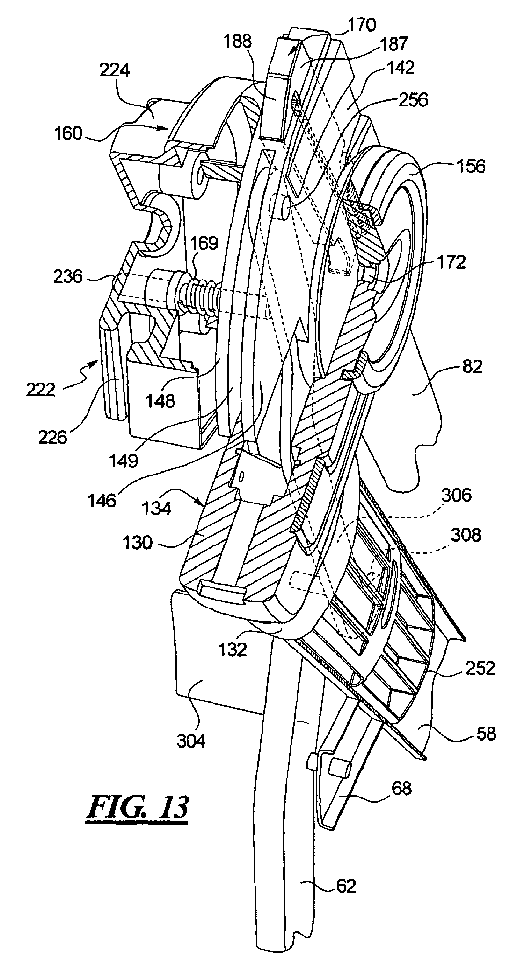

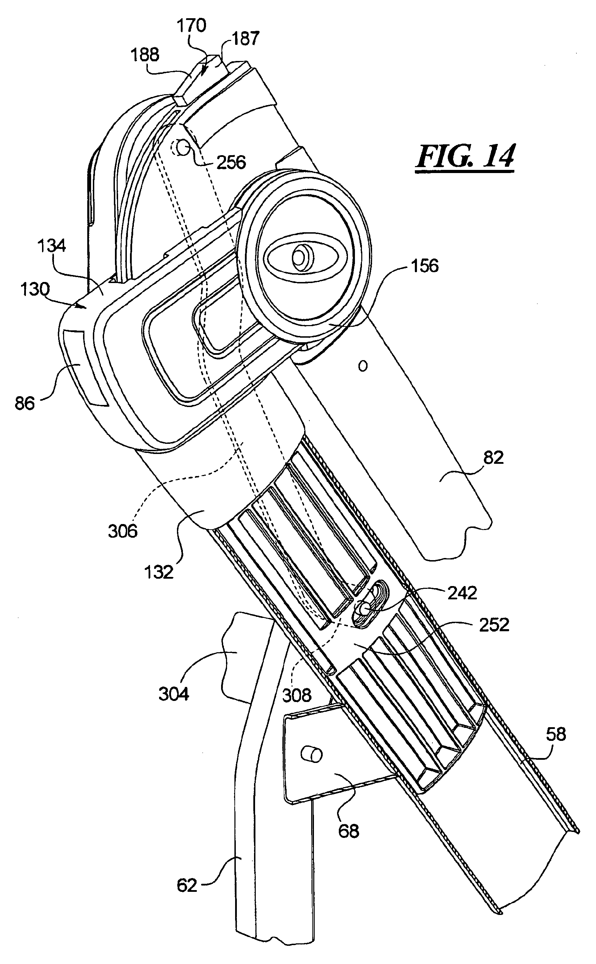

FIGS. 13 and 14 show an outside, partly cut away and partial phantom view of the left side fold joint 56 on the stroller frame assembly 301 in FIG. 12. Other than the elimination of the spacer link 238, only the fold link 250 from the prior example is different in this example. An alternate fold link 306 is pivotally connected at its upper end to the cam 142 and at its lower end to the shuttle pin 242. In this example, the lower end 308 of the link 306 has only an aperture for connection to the pin. The link 306 has no elongate link slot 253 as in the prior example. This, there will be no motion lag between the handle assembly and the front leg 62 during folding in this example. As soon as the handle assembly 80 begins to move downward during folding, the hidden link 306 will move upward and the shuttle pin 242 and shuttle 252 will move upward. This in turn will immediately start to fold the front leg 62 toward the rear leg 58. In this example, when the handle assembly 80 reaches the fully folded position depicted in FIGS. 13-15, the front leg 62 will also be fully folded.

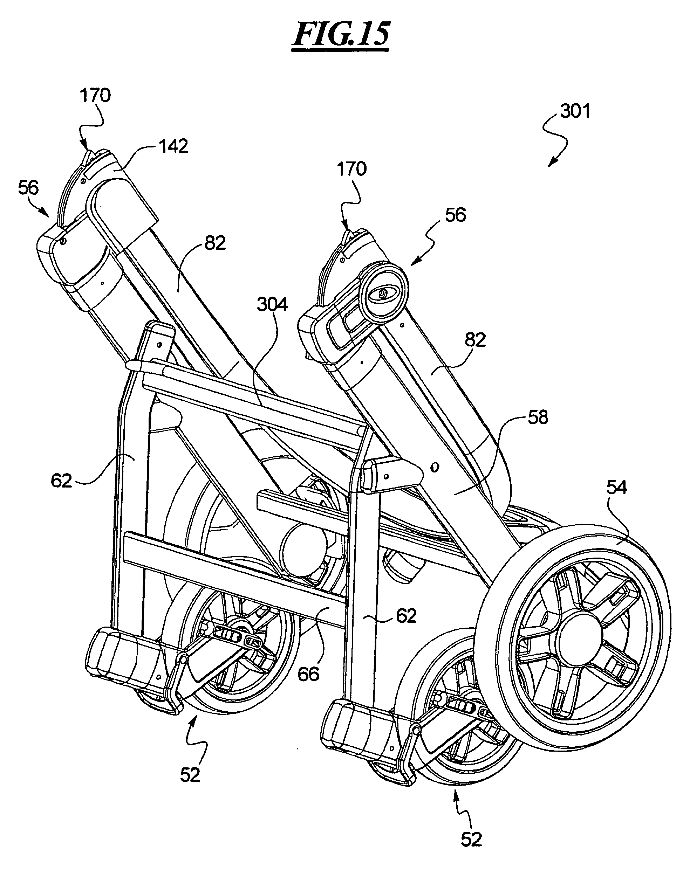

FIG. 15 shows the frame assembly 301 completely folded. The frame assembly 301 functions essentially the same as the assembly 51, other than as described herein. To unfold the assembly, a user need only pivot the handle assembly 80 toward the in-use position. This will directly and immediately begin to unfold the front leg assembly 60 relative to the rear legs 58 in this example. Without the slot 253, as on the link 250, use of the link 306 produces no motion lag between the handle assembly 80 and front legs 62, both during folding and unfolding. In the prior assembly 51, when the stroller is folded, there is a motion lag as the shuttle pin 242 travels along the link slot 253 before the link 250 moves the slot. When the stroller is unfolded, as long as the leg 62 and leg 58 are completely folded, there would be no motion lag because the pin 242 is seated at the top of the link slot and would immediately be pushed downward. However, if the legs were only partly folded as in FIG. 8, the handle would move partly upward without moving the front leg 62 while the pin traveled from the bottom of the link slot to the top.

In each disclosed embodiment, the links 250 and 306 are bent or curved to fit within the leg 58, to prevent binding during folding and unfolding, and to be able to translate lengthwise and laterally therein as the upper and lower pivot points K and S move. The link configuration and construction can vary from the examples shown within the scope of the invention. In this example, the links 250 and 306 fit within a lengthwise slot extending along the middle of the body of the shuttle 252. In alternate embodiments, the links can be attached to either side of the shuttle body or to a top or bottom thereof as well.

As will become evident to those having ordinary skill in the art, the disclosed fold joints and fold linkages can vary in configuration and construction and yet fall within the scope of the present invention. In general, the intent of the fold joints and linkages disclosed and described herein is to create a more aesthetically pleasing stroller structure, while reducing or eliminating pinch and shear points during folding or unfolding of the stroller. The disclosed optional interlock mechanism prevents a stroller seat from being unsafely utilized when the stroller is being folded or after the stroller is completely folded. The various components of these devices can be altered and rearranged and yet fall within the spirit and scope of the present invention. The materials utilized to fabricate the various components can also vary. The invention is not intended to be limited to any specific type of material for any of the components.

Although certain foldable strollers and fold mechanisms and joints have been described herein in accordance with the teachings of the present disclosure, the scope of coverage of this patent is not limited thereto but is limited only by the claims.

## Claims

1. A foldable stroller (50) comprising:
a frame assembly (51) reconfigurable between an in-use frame configuration and a folded frame configuration, the frame assembly (51) having a first frame part (58) and a second frame part (82) movable between respective in-use positions and folded positions relative to one another that correspond to the in-use and folded frame configurations;
a fold joint (56) connected to the first frame part (58) and to the second frame part (82) and having a joint pivot (P) about which the first and second frame parts pivot relative to one another between the respective in-use and folded positions; and
a fold link (250) having one end coupled to part of the frame fold joint (56) at a pivot point (K) spaced from the joint pivot (P) and having an opposite end coupled to the first frame part (58) at a connection point spaced from a fold pivot,
wherein, when the second frame part (82) is pivoted from the in-use position toward the folded position, the fold link (250) drives movement of part of the frame assembly (51) toward the folded frame configuration, and wherein the fold link (250) is hidden within an interior of the first frame part (58) with the frame assembly (51) in the in-use configuration.

2. A foldable stroller according to claim 1, wherein the frame assembly has left and right sides, each having one of the first and second frame parts, one of the fold joints (56), and one of the fold links (250).

3. A foldable stroller according to claim 1, wherein the first frame part is a rear leg (58) of the frame assembly (51).

4. A foldable stroller according to claim 1, wherein the second frame part is a push bar (82) of a handle assembly.

5. A foldable stroller according to claim 1, further comprising a shuttle (252) slidable within the interior of the first frame part, the opposite end (251) of the fold link (250) being connected to the shuttle (252).

6. A foldable stroller according to claim 1, the fold joint (56) comprising a cam (142) positioned within the interior of the first frame part (58) with the frame assembly in the in-use configuration and pivotable out of the interior when the frame assembly (51) is moved toward the folded configuration.

7. A foldable stroller according to claim 6, wherein the cam (142) closes an opening into the interior of the first frame part (58) in the folded configuration.

8. A foldable stroller according to claim 6, wherein the one end of the fold link (250) is connected to the cam (142).

9. A foldable stroller according to claim 1, wherein the frame assembly (51) includes a third frame part (60) coupled to the first frame part (58) at a pivot, and wherein a stub portion (70) of the third frame part extends beyond the pivot and is connected to the opposite end of the fold link (250).

10. A foldable stroller according to claim 9, further comprising a stand off (68) connected to and extending forward from the first frame part (58), the pivot carried on a free end of stand off.

11. A foldable stroller according to claim 1,
wherein the fold link (250) has one end coupled to a pivot point spaced radially from the joint pivot (P) and has an opposite end coupled to the first frame part (58) at a connection point spaced from the fold pivot whereby the fold link (250) folds a part of the frame assembly (51) toward the folded orientation as the second frame part (82) is pivoted about the joint pivot (P), and
wherein the fold link (250) extends lengthwise along an interior portion of the first frame part (58) when the frame assembly (51) is in the in-use configuration.

12. A foldable stroller frame assembly according to claim 11, wherein an upper end of the rear leg (58) is connected to the fold joint (56) and a lower end of the push bar (82) is connected to the fold joint (56).

13. A foldable stroller frame assembly according to claim 11, further comprising:
a link slot (253) extending lengthwise along and formed in the opposite end of the fold link(250);
a shuttle (252) positioned and slidable within the interior of the first frame part (58); and
a pin (242) movable with the shuttle (252) and captured in the link slot (253).

14. A foldable stroller frame assembly according to claim 13, further comprising a shuttle slot (254) formed through the shuttle (252) and oriented generally normal to the orientation of the link slot (253), the pin (242) also captured within the shuttle slot (254).

15. A foldable stroller frame assembly according to claim 13, further comprising a curved slot (72) formed through and along the first frame part (58), the pin (242) also captured in the curved slot (72).

## Patentansprüche

1. Zusammenklappbarer Kinderwagen (50), umfassend:
eine Rahmenbaugruppe (51), die zwischen einer In-Gebrauch-Rahmenkonfinuration und einer zusammengeklappten Rahmenkonfiguration rekonfigurierbar ist, wobei die Rahmenbaugruppe (51) einen ersten Rahmenteil (58) und einen zweiten Rahmenteil (82) aufweist, die zwischen entsprechenden In-Gebrauch-Positionen und zusammengeklappten Positionen relativ zueinander bewegbar sind, die den In-Gebrauch- und zusammengeklappten Rahmenkonfigurationen entsprechen;
ein Klappgelenk (56), das mit dem ersten Rahmenteil (58) und mit dem zweiten Rahmenteil (82) verbunden ist und eine Gelenkschwenkachse (P) aufweist, um die die ersten und zweiten Rahmenteile relativ zueinander zwischen den entsprechenden In-Gebrauch- und zusammengeklappten Positionen verschwenken; und
eine Klappverbindung (250), deren eines Ende mit einem Teil des Rahmenklappgelenks (56) an einem Schwenkpunkt (K) verbunden ist, der von der Gelenkschwenkachse (P) beabstandet ist, und deren gegenüberliegendes Ende mit dem ersten Rahmenteil (58) an einem Verbindungspunkt verbunden ist, der von einer Klappschwenkachse beabstandet ist,
wobei, wenn der zweite Rahmenteil (82) aus der In-Gebrauch-Position in die zusammengeklappte Position verschwenkt wird, die Klappverbindung (250) eine Bewegung eines Teils der Rahmenbaugruppe (51) zur zusammengeklappten Rahmenkonfiguration hin antreibt, und wobei die Klappverbindung (250) in einem Inneren des ersten Rahmenteils (58) verborgen ist, wenn die Rahmenbaugruppe (51) sich in der In-Gebrauch-Konfiguration befindet.

2. Zusammenklappbarer Kinderwagen nach Anspruch 1, wobei die Rahmenbaugruppe linke und rechte Seiten besitzt, von denen jede die ersten und zweiten Rahmenteile, eines der Klappgelenke (56) und eine der Klappverbindungen (250) aufweist.

3. Zusammenklappbarer Kinderwagen nach Anspruch 1. wobei der erste Rahmenteil ein Hinterbein (58) der Rahmenbaugruppe (51) ist.

4. Zusammenklappbarer Kinderwagen nach Anspruch 1, wobei der zweite Rahmenteil eine Schubstange (82) einer Griffbaugruppe ist.

5. Zusammenklappbarer Kinderwagen nach Anspruch 1, der ein Verschiebeteil (252) umfasst, das im Inneren des ersten Rahmenteils verschiebbar ist, wobei das gegenüberliegende Ende (51) der Klappverbindung (250) mit dem Verschiebeteil (252) verbunden ist.

6. Zusammenklappbarer Kinderwagen nach Anspruch 1, wobei das Klappgelenk (56) eine Nocke (142) umfasst, die im Inneren des ersten Rahmenteils (58) angeordnet ist, wenn die Rahmenbaugruppe sich in der In-Gebrauch-Konfiguration befindet, und aus dem Inneren heraus verschwenkbar ist, wenn die Rahmenbaugruppe (51) in die zusammengeklappte Konfiguration bewegt wird.

7. Zusammenklappbarer Kinderwagen nach Anspruch 6, wobei die Nocke (142) in der zusammengeklappten Konfiguration eine Öffnung in das Innere des ersten Rahmenteils (58) hinein verschließt.

8. Zusammenklappbarer Kinderwagen nach Anspruch 6, wobei das eine Ende der Klappverbindung (250) mit der Nocke (142) verbunden ist.

9. Zusammenklappbarer Kinderwagen nach Anspruch 1, wobei die Rahmenbaugruppe (51) einen dritten Rahmenteil (60) einschließt, der mit dem ersten Rahmenteil (58) an einem Schwenkpunkt verbunden ist, und wobei ein Stummelabschnitt (70) des dritten Rahmenteils sich über den Schwenkpunkt hinaus erstreckt und mit dem gegenüberliegenden Ende der Klappverbindung (250) verbunden ist.

10. Zusammenklappbarer Kinderwagen nach Anspruch 9, der weiter einen Vorsprung (68) umfasst, der mit dem ersten Rahmenteil (58) verbunden ist und sich von diesem aus erstreckt, wobei der Schwenkpunkt sich auf einem freien Ende des Vorsprungs befindet.

11. Zusammenklappbarer Kinderwagen nach Anspruch 1,
wobei ein Ende der Klappverbindung (250) mit einem Schwenkpunkt verbunden ist, der radial von der Gelenkschwenkachse (P) beabstandet ist, und deren gegenüberliegendes Ende mit dem ersten Rahmenteil (58) an einem Verbindungspunkt verbunden ist, der von dem Klappschwenkpunkt beabstandet ist, wodurch die Klappverbindung (250) einen Teil der Rahmenbaugruppe (51) in die zusammengeklappte Ausrichtung klappt, wenn das zweite Rahmenteil (82) um die Gelenkschwenkachse (P) verschwenkt wird, und
wobei die Klappverbindung (250) sich längs entlang des Innenabschnittes des ersten Rahmenteils (58) erstreckt, wenn die Rahmenbaugruppe (51) sich in der In-Gebrauch-Konfiguration befindet.

12. Rahmenbaugruppe eines zusammenklappbaren Kinderwagens nach Anspruch 11, wobei ein oberes Ende des Hinterbeins (58) mit dem Klappgelenk (56) verbunden ist und ein unteres Ende der Schubstange (82) mit dem Klappgelenk (56) verbunden ist.

13. Rahmenbaugruppe eines zusammenklappbaren Kinderwagens nach Anspruch 11, weiter umfassend:
einen Verbindungsschlitz (253), der sich längs entlang des gegenüberliegenden Endes der Klappverbindung (250) erstreckt und darin ausgebildet ist;
ein Verschiebeteil (252), das im Inneren des ersten Rahmenteils (58) angeordnet und verschiebbar ist; und
einen Stift (242), der mit dem Verschiebeteil (252) verschiebbar ist und in dem Verbindungsschlitz (253) aufgenommen ist.

14. Rahmenbaugruppe eines zusammenklappbaren Kinderwagens nach Anspruch 13, die weiter einen Verschiebeteilschlitz (254) umfasst, der durch das Verschiebeteil (252) hindurch ausgebildet ist und im allgemeinen senkrecht zur Ausrichtung des Verbindungsschlitzes (253) ausgerichtet ist, wobei der Stift (242) auch in dem Verschiebeteilschlitz (254) aufgenommen ist.

15. Rahmenbaugruppe eines zusammenklappbaren Kinderwagens nach Anspruch 13, die weiter einen gebogenen Schlitz (72) umfasst, der durch das erste Rahmenteil (58) hindurch und entlang desselben ausgebildet ist, wobei der Stift (242) auch in dem gebogenen Schlitz (72) aufgenommen ist.

## Revendications

1. Poussette pliable (50) comprenant :
un ensemble de châssis (51) reconfigurable entre une configuration de châssis d'utilisation et une configuration de châssis pliée, l'ensemble de châssis (51) ayant une première partie de châssis (58) et une deuxième partie de châssis (82) mobiles entre les positions d'utilisation et les positions pliées les unes par rapport aux autres qui correspondent aux configurations de châssis d'utilisation et pliée ;
un joint de pliage (56) raccordé à la première partie de châssis (58) et à la deuxième partie de châssis (82) et ayant un pivot de joint (P) autour duquel les première et deuxième parties de châssis pivotent l'une par rapport à l'autre entre les positions d'utilisation et pliée respectives ; et
une liaison de pliage (250) ayant une extrémité couplée à une partie du joint de pliage de châssis (56) au niveau d'un point de pivot (K) espacé du pivot de joint (P) et ayant une extrémité opposée couplée à la première partie de châssis (58) au niveau d'un point de raccordement espacé d'un pivot de pliage,
dans laquelle, lorsque la deuxième partie de châssis (82) est pivotée de la position d'utilisation vers la position pliée, la liaison de pliage (250) entraîne le mouvement d'une partie de l'ensemble de châssis (51) vers la configuration de châssis pliée, et dans laquelle la liaison de pliage (250) est dissimulée à l'intérieur de la première partie de châssis (58) avec l'ensemble de châssis (51) dans la configuration d'utilisation.

2. Poussette pliable selon la revendication 1, dans laquelle l'ensemble de châssis a des côtés gauche et droit, ayant chacun l'une parmi les première et deuxième parties de châssis, l'un des joints de pliage (56) et l'une des liaisons de pliage (250).

3. Poussette pliable selon la revendication 1, dans lequel la première partie de châssis est une patte arrière (58) de l'ensemble de châssis (51).

4. Poussette pliable selon la revendication 1, dans laquelle la deuxième partie de châssis est une barre de poussée (82) d'un ensemble de poignée.

5. Poussette pliable selon la revendication 1, comprenant en outre une navette (252) pouvant coulisser à l'intérieur de la première partie de châssis, l'extrémité opposée (251) de la liaison de pliage (250) étant raccordée à la navette (252).

6. Poussette pliable selon la revendication 1, le joint de pliage (56) comprenant une came (142) positionnée à l'intérieur de la première partie de châssis (58) avec l'ensemble de châssis dans la configuration d'utilisation et pouvant pivoter hors de l'intérieur lorsque l'ensemble de châssis (51) est déplacé vers la configuration pliée.

7. Poussette pliable selon la revendication 6, dans laquelle la came (142) ferme une ouverture dans l'intérieur de la première partie de châssis (58) dans la configuration pliée.

8. Poussette pliable selon la revendication 6, dans laquelle la une extrémité de la liaison de pliage (250) est raccordée à la came (142).

9. Poussette pliable selon la revendication 1, dans laquelle l'ensemble de châssis (51) comprend une troisième partie de châssis (60) couplée à la première partie de châssis (58) au niveau d'un pivot, et dans laquelle une partie de goujon (70) de la troisième partie de châssis s'étend au-delà du pivot et est raccordée à l'extrémité opposée de la liaison de pliage (250).

10. Poussette pliable selon la revendication 9, comprenant en outre une douille-entretoise (68) raccordée à et s'étendant vers l'avant à partir de la première partie de châssis (58), le pivot étant supporté sur une extrémité libre de la douille-entretoise.

11. Poussette pliable selon la revendication 1,
dans laquelle la liaison de pliage (250) a une extrémité couplée à un point de pivot radialement espacé du pivot de joint (P) et a une extrémité opposée couplée à la première partie de châssis (58) au niveau d'un point de raccordement espacé du pivot de pliage, moyennant quoi la liaison de pliage (250) plie une partie de l'ensemble de châssis (51) vers l'orientation pliée lorsque la deuxième partie de châssis (82) est pivotée autour du pivot de joint (P), et
dans laquelle la liaison de pliage (250) s'étend dans le sens de la longueur le long d'une partie intérieure de la première partie de châssis (58) lorsque l'ensemble de châssis (51) est dans la configuration d'utilisation.

12. Ensemble de châssis de poussette pliable selon la revendication 11, dans lequel une extrémité supérieure de la patte arrière (58) est raccordée au joint de pliage (56) et une extrémité inférieure de la barre de poussée (82) est raccordée au joint de pliage (56).

13. Ensemble de châssis de poussette pliable selon la revendication 11, comprenant en outre :
une fente de liaison (253) s'étendant dans le sens de la longueur le long de et formée dans l'extrémité opposée de la liaison de pliage (250) ;
une navette (252) positionnée et pouvant coulisser à l'intérieur de la première partie de châssis (58) ; et
une broche (242) mobile avec la navette (252) et capturée dans la fente de liaison (253).

14. Ensemble de châssis de poussette pliable selon la revendication 13, comprenant en outre une fente de navette (254) formée à travers la navette (252) et orientée généralement horizontalement par rapport à l'orientation de la fente de liaison (253), la broche (242) étant également capturée à l'intérieur de la fente de navette (254).

15. Ensemble de châssis de poussette pliable selon la revendication 13, comprenant en outre une fente incurvée (72) formée à travers et le long de la première partie de châssis (58), la broche (242) étant également capturée dans la fente incurvée (72).
